# DEMANDE DE BREVET EUROPEEN

(11) **EP 1 429 065 A1**
(43) Date de publication de la demande: **16.06.2004**
(21) Numéro de dépôt: 03356175.4
(22) Date de dépôt: 13.11.2003
(51) Int. Cl.: F16L 19/065

(54) **Dispositif de raccordement et de liaison de canalisations**

(30) Priorité: 29.11.2002 FR 0215239
(71) Demandeur: Ades Technologies, 42100 Saint Etienne (FR)
(72) Inventeur: Modrin, Jean-Louis, 42260 Pommiers en Forez (FR); Fleury, Michel Paul, 42000 Saint Etienne (FR)
(74) Mandataire: Dupuis, François

(57) **Abrégé**

Le dispositif de raccordement et de liaison de canalisations du type comprenant une bague-écrou (5) avec un taraudage à l'intérieur, susceptible d'être solidarisé à un corps (1) cylindrique dont chacune des parties de l'extrémité est filetée (1b), est remarquable en ce qu'un moyen d'ancrage et d'étanchéité (11) est monobloc et comprend une bague d'étanchéité profilée constituée par un insert (11a), en un ou plusieurs segments (11a1) sur lequel est rapporté un matériau (11b) en élastomère et autre matériau assurant l'étanchéité, la bague d'étanchéité ainsi obtenue présentant sensiblement dans sa partie médiane une collerette (11c) en saillie venant se loger et étant maintenue et ancrée dans le ou les filets (5a) de la partie taraudée de la bague-écrou, et d'un côté de ladite collerette avec une forme frontale (11e) se logeant dans le siège établi à l'extrémité du corps du raccord et de l'autre côté à l'opposé présentant ou recevant un profil d'étanchéité (11f), et en ce que l'action de serrage de la bague-écrou sur le corps du raccord entraîne la déformation de la bague d'étanchéité et son serrage sur le conduit à étancher, en constituant une barrière totale dans l'espace défini entre le taraudage intérieur de la bague-écrou et le conduit.

## Description

L'invention se rattache au secteur technique des raccords de canalisations et de tuyauteries, ces derniers étant généralement métalliques.

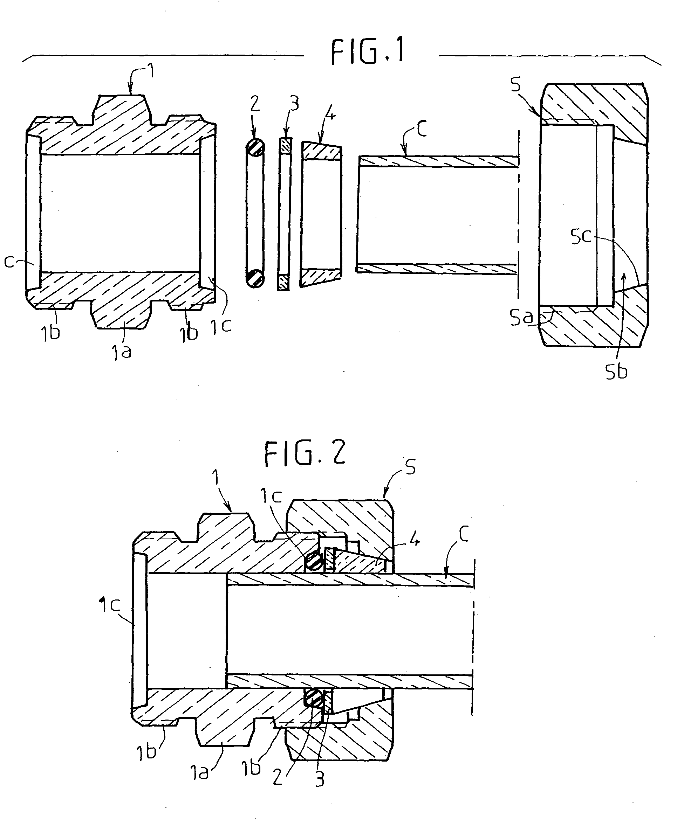

Pour exposer le problème posé à l'origine de l'invention, on a illustré figures 1 et 2 un dispositif connu et exploité par le Demandeur.

Le dispositif de raccordement comprend généralement un corps (1) avec alésage cylindrique avec dans sa partie centrale un épaulement en saillie (1a) profilé en six pans formant écrou et de part et d'autre deux portées cylindriques (1b) filetées extérieurement.

Le corps permet le passage des conduits à raccorder, le conduit étant en tout matériau. Chaque extrémité du corps présente un épaulement intérieur (1c) formant siège d'un joint torique (2). Au moins d'un côté du corps est alors positionnée une rondelle (3) d'appui, puis une bague conique (4) fendue sur tout ou partie de sa longueur et qui vient se loger dans une bague-écrou (5), laquelle est vissée sur la portée filetée (1b) du corps du raccord.

Un dispositif de raccordement de ce type entraîne des inconvénients dans le nombre de pièces et dans le montage.

On connaît par ailleurs par le brevet DE 1625961 un dispositif de raccordement incluant une bague d'étanchéité intermédiaire en matériau plastique avec un bourrelet d'étanchéité. On connaît aussi par le brevet EP 1186821 un raccord sous forme de bague dont l'extrémité est fendue axialement pour le clipsage sur un écrou. Les documents précités restent néanmoins très aléatoires dans leur résultat après mise en oeuvre dans l'élaboration de l'étanchéité et le brevet européen décrit des formes complexes à obtenir.
La démarche du Demandeur a ainsi été de rechercher à rationaliser la fabrication de ce type de raccord par une réduction des composants et aussi par une amélioration de l'étanchéité.
Différentes orientations de recherche ont été examinées et n'ont pas été directement satisfaisantes en égard des conditions de réalisation et des objectifs visés.

En pratique, la solution imaginée apparaît optimiser la fabrication du dispositif de raccordement en procédant à une modification des zones d'étanchéité et de leurs applications.

Ainsi, selon l'invention, le dispositif de raccordement est du type comprenant une bague-écrou avec un taraudage à l'intérieur, susceptible d'être solidarisé à un corps cylindrique dont chacune des parties de l'extrémité est filetée, et comprend un moyen d'ancrage et d'étanchéité monobloc et constitué sous forme d'une bague d'étanchéité profilée, caractérisé en ce que la bague comprenant un insert , en un ou plusieurs segments autour duquel ou desquels est rapporté un matériau en élastomère et autre matériau assurant l'étanchéité, la bague d'étanchéité ainsi obtenue présentant sensiblement dans sa partie médiane une collerette en saillie venant se loger et étant maintenue et ancrée dans le ou les filets de la partie taraudée de la bague-écrou, et d'un côté de ladite collerette avec une forme frontale se logeant dans le siège établi à l'extrémité du corps du raccord et de l'autre côté à l'opposé présentant ou recevant un profil d'étanchéité, et en ce que l'action de serrage de la bague-écrou sur le corps du raccord entraîne la déformation de la bague d'étanchéité et son serrage sur le conduit à étancher, en constituant une barrière totale dans l'espace défini entre le taraudage intérieur de la bague-écrou et le conduit, et en ce que l'accrochage-ancrage du tube de canalisations est assuré par les inserts.

Selon une autre caractéristique, le moyen d'ancrage et d'étanchéité comprend un insert de forme circulaire constitué avec n secteurs, lesdits secteurs étant séparés partiellement ou totalement les uns aux autres par des fentes remplies par le matériau élastomère par surmoulage.
Selon une autre caractéristique, le moyen d'ancrage et d'étanchéité est monobloc et comprend, au delà de sa partie formant collerette s'ajustant dans le filetage de la bague-écrou et à l'opposé du corps de raccord, un profil conique dégressif venant se loger dans la partie inférieure conique formant le siège de la bague-écrou.

Ces caractéristiques et d'autres encore ressortiront bien de la suite de la description.

Pour fixer l'objet de l'invention illustré d'une manière non limitative aux figures des dessins où :
- La figure 1 est une vue du dispositif de raccord selon l'art antérieur dans une vue éclatée avant montage.
- La figure 2 est une vue du dispositif selon l'art antérieur après montage.
- La figure 3 est une vue du dispositif de raccord selon l'invention dans une première mise en oeuvre et avant montage.
- La figure 4 est une vue du dispositif de raccord selon la figure 3 après montage et avant serrage.
- La figure 5 est une vue du dispositif de raccord selon la figure 4 après montage et après serrage.
- La figure 6 est une vue du moyen d'ancrage et d'étanchéité seul vue de profil, selon la ligne de coupe A.A.
- La figure 7 est une vue du moyen d'ancrage et d'étanchéité vue de droite par rapport à la figure 6, représentant l'insert avec trois secteurs par exemple.
- La figure 8 est une vue en perspective de trois quarts du moyen d'ancrage et d'étanchéité seul.
- La figure 9 est une vue en variante du moyen d'ancrage et d'étanchéité avec une seule fente d'ouverture.
- La figure 10 est une vue en variante du moyen d'ancrage et d'étanchéité.
- La figure 11 est une vue en variante du moyen d'ancrage et d'étanchéité.

Afin de rendre plus concret l'objet de l'invention, on le décrit maintenant d'une manière non limitative illustrée aux figures des dessins.

Le dispositif de raccordement selon l'invention est référencé dans son ensemble par (10). Il comprend un corps (1) cylindrique avec un alésage intérieur (1d) lisse permettant le passage d'une canalisation (C), une partie centrale (1a) formant collerette profilée en six pans et de part et d'autre une ou plusieurs portées cylindriques filetées (1b). A l'extrémité, est formé un épaulement intérieur (1c) formant siège. La bague-écrou (5) présente un taraudage intérieur (5a) sur une partie de sa longueur.

Selon l'invention, ladite bague-écrou (5) est agencée avec une ouverture (5b) définissant une partie conique (5c) formant siège et étant de plus grand diamètre dans l'intérieur. Le moyen d'ancrage et d'étanchéité (11) selon l'invention est monobloc. Il est constitué sous forme d'une bague profilée comprenant un insert (11a) en un ou plusieurs segments (11a1) autour duquel ou desquels est rapporté par surmoulage ou adhésivage un matériau (11b) en élastomère ou autres assurant l'étanchéité. Plus particulièrement, la bague ainsi constituée comprend une collerette (11c) en saillie de diamètre tel qu'elle vienne se loger et se maintenir dans le ou les filets (5a) de la bague-écrou. L'insert (11a) est circulaire, en différents matériaux, en une ou plusieurs parties, en forme de secteur angulaire, en définissant au moins une fente ou ouverture (11d) et de préférence plusieurs, n fentes et n ouvertures, pour permettre le remplissage par le matériau élastomère, et surtout pour permettre un meilleur accrochage par contact sur les parties d'appui correspondant tout en diminuant le couple de serrage au préassemblage. L'insert peut être réalisé avec n segments indépendants les uns des autres et enrobés par le matériau élastomère. En variante, les segments peuvent être reliés par une partie de liaison de petite section, le matériau de garnissage entourant l'ensemble.

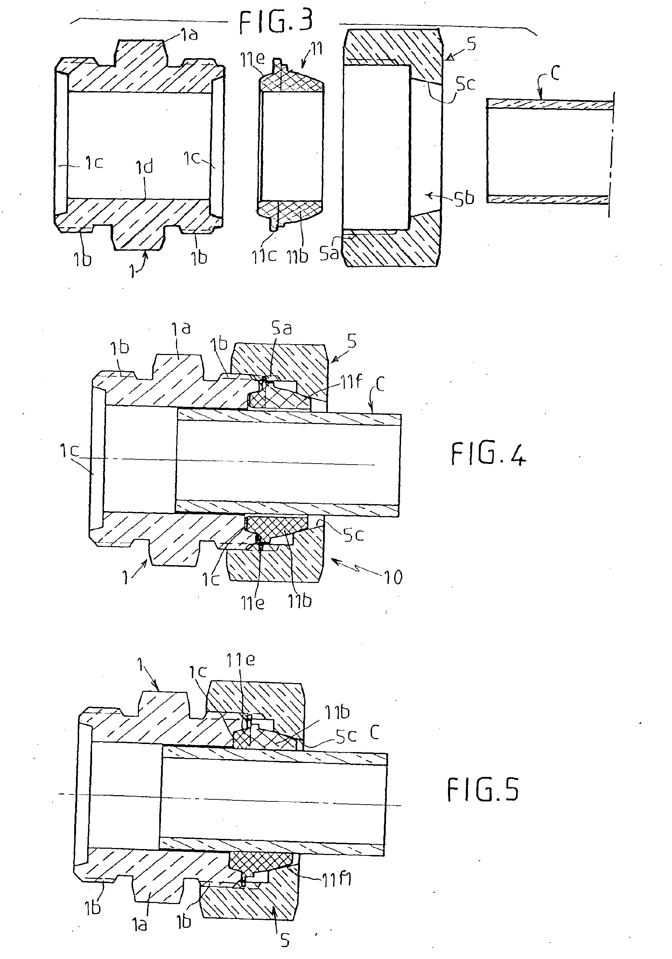

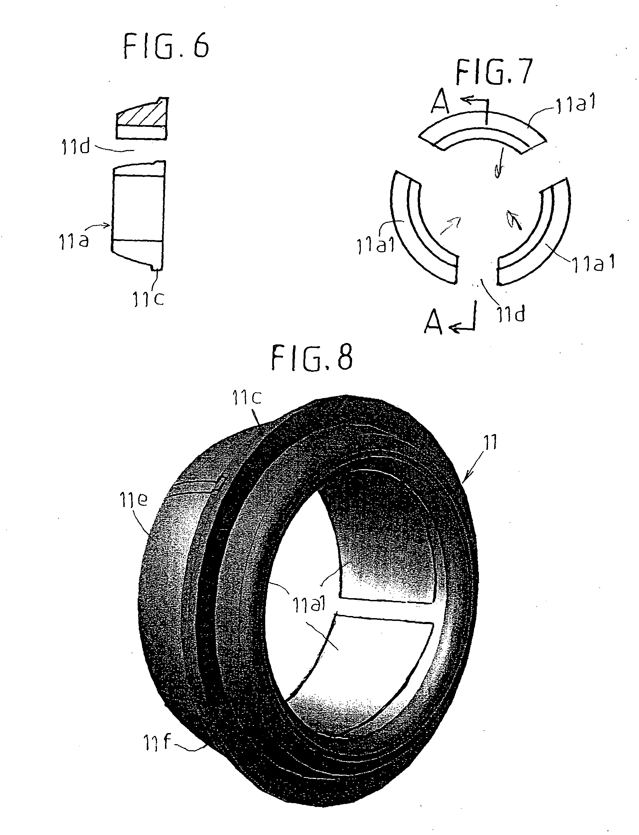

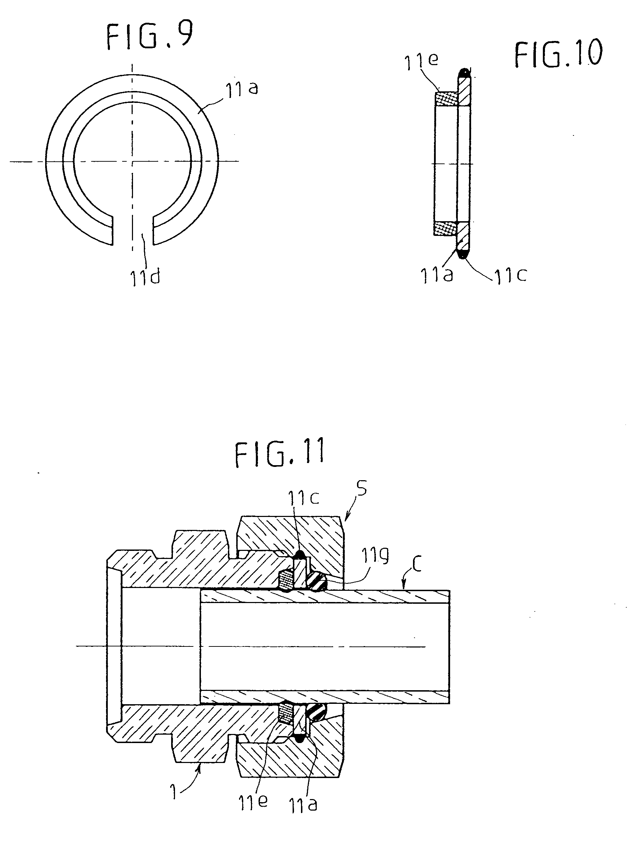

Le moyen d'ancrage et d'étanchéité ainsi réalisé présente, d'un côté de la collerette (11c) correspondant à celui destiné à être en regard du corps, une forme frontale (11e) dans un matériau élastomère susceptible de venir se centrer dans la partie siège formée sur ledit corps. En se référant par exemple aux figures 3 à 8, la forme (11e) est obtenue directement avec la partie de recouvrement de l'insert. En se référant à la variante de la figure 7, ladite forme (11e) est rapportée et adhésivée de toute manière appropriée contre la face adjacente en regard de l'insert.

Par ailleurs, l'autre partie (11f) du moyen d'ancrage et d'étanchéité, en regard de la bague-écrou (5) est soit rapportée et adhésivée à la forme apparente de l'insert, soit de préférence obtenue directement avec le moyen (11) en constituant un surmoulage de l'insert.

Dans cette mise en oeuvre, ladite partie (11f) présente un profil conique (11f1) susceptible de se centrer sur la partie siège correspondante formée sur la bague-écrou.

En variante, l'autre partie (11f) est établie selon une forme en jonc (11g) solidaire de la face en regard de l'insert par tout moyen, en venant se centrer dans la partie siège de la forme conique de la bague-écrou.

En se référant aux dessins, l'insert peut être réalisé en un matériau métallique de rigidification avec plusieurs fentes établies dans la largeur, débouchantes ou non, et définissant des espaces de logement dans le matériau élastomère, en constituant pour celui-ci autant de zones d'ancrage qu'il y a de fentes.

Dans la mise en oeuvre particulière de la figure 7, l'insert présente une forme en fer à cheval avec une seule fente, avec donc un seul point d'ancrage du matériau.

Ainsi, selon l'invention, le dispositif de raccordement présente de nombreux avantages.

Il y a tout d'abord une réduction du nombre de composants à monter, puisque le moyen d'ancrage et d'étanchéité monobloc en lui-même constitue un tout prêt à monter.

Un autre avantage réside dans la liaison et le maintien du moyen d'étanchéité dans la bague-écrou en étant maintenue dans le ou les filets.

Un autre avantage réside dans l'étanchéité améliorée, intervenue entre le moyen d'ancrage et d'étanchéité constituant une barrière dans le volume établi entre la bague-écrou et le conduit ou canalisation. Il y a lieu de préciser qu'en situation de montage, le moyen d'ancrage et d'étanchéité n'est pas sollicité, n'est donc pas déformé, et n'a pas de contact avec la canalisation. Par contre, l'effet de serrage de la bague-écrou provoque la déformation de la partie matériau élastomère et celle-ci vient en appui sur la canalisation, la partie collerette venant elle en appui contre la face en regard du corps du raccord et la partie siège dudit corps de raccord, l'ancrage-accrochage du tube de canalisation étant assuré par les inserts.

## Revendications

1. Dispositif de raccordement et de liaison de tubes de canalisations du type comprenant une bague-écrou (5) avec un taraudage à l'intérieur, susceptible d'être solidarisé à un corps (1) cylindrique dont chacune des parties de l'extrémité est filetée (1b), et comprenant un moyen d'ancrage et d'étanchéité (11) monobloc et constitué sous forme d'une bague d'étanchéité profilée, **caractérisé en ce que** la bague comprenant un insert (11a), en un ou plusieurs segments (11a1) autour duquel ou desquels est rapporté un matériau (11b) en élastomère et autre matériau assurant l'étanchéité, la bague d'étanchéité ainsi obtenue présentant sensiblement dans sa partie médiane une collerette (11c) en saillie venant se loger et étant maintenue et ancrée dans le ou les filets (5a) de la partie taraudée de la bague-écrou, et d'un côté de ladite collerette avec une forme frontale (11e) se logeant dans le siège établi à l'extrémité du corps du raccord et de l'autre côté à l'opposé présentant ou recevant un profil d'étanchéité (11f), et **en ce que** l'action de serrage de la bague-écrou sur le corps du raccord entraîne la déformation de la bague d'étanchéité et son serrage sur le conduit à étancher, en constituant une barrière totale dans l'espace défini entre le taraudage intérieur de la bague-écrou et le conduit, et **en ce que** l'accrochage-ancrage du tube de canalisations est assuré par les inserts.

2. Dispositif selon la revendication 1, **caractérisé en ce que** le moyen d'ancrage et d'étanchéité comprend un insert (11a) de forme circulaire constitué avec n secteurs (11a1), lesdits secteurs étant reliés les uns aux autres par des fentes (11d) remplies par le matériau élastomère (11b) par surmoulage.

3. Dispositif selon la revendication 2, **caractérisé en ce que** le moyen d'étanchéité est monobloc et comprend, au delà de sa partie formant collerette (11c) s'ajustant dans le filetage de la bague-écrou et à l'opposé du corps de raccord, un profil (11f) conique dégressif venant se loger dans la partie inférieure conique formant le siège de la bague-écrou.

4. Dispositif selon la revendication , **caractérisé en ce que** la forme (11e) est rapportée et adhésivée contre la face en regard de l'insert (11a).

5. Dispositif selon la revendication 1, **caractérisé en ce que** la partie (11f) du moyen d'ancrage et d'étanchéité est rapportée et adhésivée à la forme apparente de l'insert.

6. Dispositif selon la revendication 1, **caractérisé en ce que** la partie (11f) du moyen d'ancrage et d'étanchéité est établie sous forme d'un jonc (11g) solidarisé de la face en regard de l'insert en venant se centrer dans la partie siège de la forme conique de la bague-écrou.

7. Dispositif selon la revendication 2, **caractérisé en ce que** l'insert comprend n segments indépendants définissant n ouvertures autorisant le remplissage par le matériau de garnissage par surmoulage.

8. Dispositif selon la revendication 2, **caractérisé en ce que** l'insert comprend n segments définissant n ouvertures et reliés entre eux par une bande de liaison, le matériau de garnissage surmoulant l'ensemble.
